# EUROPÄISCHE PATENTSCHRIFT

(11) **EP 4 141 605 B1**
(45) Veröffentlichungstag und Bekanntmachung des Hinweises auf die Patenterteilung: **10.04.2024**
(21) Anmeldenummer: 22185859.0
(22) Anmeldetag: 19.07.2022
(51) Int. Cl.: G05D 1/02

(54) **VERFAHREN UND VORRICHTUNG ZUR FÜHRUNG EINES FAHRZEUGS AUF EINEM UNTERGRUND**
METHOD AND DEVICE FOR GUIDING A VEHICLE ON A SUBSTRATE
PROCÉDÉ ET DISPOSITIF DE GUIDAGE D'UN VÉHICULE SUR UN TERRAIN NATUREL

(30) Priorität: 23.08.2021 DE 102021209240
(43) Veröffentlichungstag der Anmeldung: 01.03.2023
(73) Patentinhaber: Pepperl+Fuchs SE, 68307 Mannheim (DE)
(72) Erfinder: Siebert, Gerhard, 67227 Frankenthal (DE)
(74) Vertreter: Ullrich & Naumann PartG mbB

(56) Entgegenhaltungen:
- EP-A1- 3 308 911
- US-A1- 2007 253 033
- US-A1- 2019 120 967

## Beschreibung

Die Erfindung betrifft ein Verfahren zur Führung eines Fahrzeugs auf einem Untergrund, wobei das Fahrzeug mittels einer auf dem Untergrund zumindest abschnittsweise angeordneten Markierung und einem zur Erkennung der Markierung ausgebildeten und dem Fahrzeug zugeordneten Detektor entlang einer vorbestimmbaren Strecke geführt wird.

Des Weiteren betrifft die vorliegende Erfindung eine Vorrichtung zur Führung eines Fahrzeugs auf einem Untergrund, insbesondere zur Durchführung des obigen Verfahrens, wobei das Fahrzeug mittels einer auf dem Untergrund zumindest abschnittsweise angeordneten Markierung und einem zur Erkennung der Markierung ausgebildeten und dem Fahrzeug zugeordneten Detektor entlang einer vorbestimmbaren Strecke führbar ist.

Verfahren und Vorrichtungen der eingangs genannten Art, bei denen ein Fahrzeug auf einem Untergrund geführt wird, sind aus der Praxis bekannt und existieren in unterschiedlichen Ausführungsformen. Derartige Fahrzeuge finden ihre Anwendung beispielsweise als fahrerlose Transportsysteme, FTS, in vielen Bereichen der modernen Produktion, beispielsweise in der Automobilindustrie, die durch einen hohen Wandlungs- und Automatisierungsgrad gekennzeichnet ist. So übernehmen eine Vielzahl fahrerloser Transportsysteme unterschiedliche, innerbetriebliche Transportaufgaben und leisten damit einen entscheidenden Beitrag, die Geschwindigkeit, Sicherheit und Kosteneffizienz im laufenden Betrieb zu optimieren. Vor allem im Kontext von Industrie 4.0 erleben FTS einen regelrechten Hype und verhelfen nicht nur Automobilherstellern zu schlanken, agilen Produktionsanlagen.

Des Weiteren ist es bekannt, Markierungen auf einem Untergrund, beispielsweise ein Untergrund in Form eines Bodens in einer Industriehalle, aufzubringen, wobei die Markierung in Form einer Farbspur - auch in schwarz - realisiert werden kann, die mit einem geeigneten Detektor erkannt und zur Führung des Fahrzeugs verwendet wird. Entsprechende bekannte Systeme arbeiten mit derartigen Kontrastspuren. Üblich ist dabei ein heller Hintergrund mit einer schwarzen Spur. Diese Spurführung ist allerdings oft nicht von einer "falschen Spur" zu unterscheiden, die beispielsweise durch eine identisch aussehende schmale dunkle Bremsspur auf hellem Hintergrund bzw. Untergrund gebildet sein kann. Derartige "falsche Spuren" können auch durch beispielsweise Rillen oder Dehnfugen gebildet sein, in denen sich Schmutz angesammelt hat. In einem ungünstigen Fall erkennt der Detektor dies als richtige Spur und führt ein Fahrzeug in eine falsche Richtung. Im Ergebnis ist die bekannte Führung eines Fahrzeugs auf einem Untergrund fehleranfällig und unzuverlässig.

Der vorliegenden Erfindung liegt die Aufgabe zugrunde, ein Verfahren sowie eine Vorrichtung zur Führung eines Fahrzeugs auf einem Untergrund anzugeben, wonach eine besonders sichere Führung eines Fahrzeugs auf einem Untergrund mit konstruktiv einfachen Mitteln ermöglicht ist.

Erfindungsgemäß wird die voranstehende Aufgabe durch ein Verfahren mit den Merkmalen des Anspruchs 1 sowie durch eine Vorrichtung mit den Merkmalen des Anspruchs 14 gelöst.

Danach ist das Verfahren gemäß Anspruch 1 derart ausgestaltet und weitergebildet, dass zur Erkennung der Markierung auf dem Untergrund die Markierung mittels einer Beleuchtungseinrichtung mit einem ersten Beleuchtungslicht und einem zweiten Beleuchtungslicht unterschiedlicher Wellenlänge und jeweils vorgebbarer Zeitdauer in einer vorgebbaren Reihenfolge beleuchtet wird,
dass die Wellenlänge des ersten Beleuchtungslichts und die Wellenlänge des zweiten Beleuchtungslichts derart gewählt werden, dass die Markierung für den Detektor aufgrund ihres definierbaren Remissionsspektrums bei Beleuchtung mit dem ersten Beleuchtungslicht mit einer Helligkeit oder Dunkelheit erkennbar ist, die sich von der Helligkeit oder Dunkelheit bei Beleuchtung mit dem zweiten Beleuchtungslicht unterscheidet, und
dass ein durch den Detektor ermitteltes entsprechendes Detektionsergebnis zur Führung des Fahrzeugs entlang der Strecke verwendet wird.

Des Weiteren ist gemäß Anspruch 14 die Vorrichtung zur Führung eines Fahrzeugs auf einem Untergrund derart ausgestaltet und weitergebildet, dass zur Erkennung der Markierung auf dem Untergrund die Markierung mittels einer Beleuchtungseinrichtung mit einem ersten Beleuchtungslicht und einem zweiten Beleuchtungslicht unterschiedlicher Wellenlänge und jeweils vorgebbarer Zeitdauer in einer vorgebbaren Reihenfolge beleuchtbar ist,
dass die Wellenlänge des ersten Beleuchtungslichts und die Wellenlänge des zweiten Beleuchtungslichts derart gewählt sind, dass die Markierung für den Detektor aufgrund ihres definierbaren Remissionsspektrums bei Beleuchtung mit dem ersten Beleuchtungslicht mit einer Helligkeit oder Dunkelheit erkennbar ist, die sich von der Helligkeit oder Dunkelheit bei Beleuchtung mit dem zweiten Beleuchtungslicht unterscheidet, und
dass ein durch den Detektor ermitteltes entsprechendes Detektionsergebnis mittels einer Führungseinrichtung zur Führung des Fahrzeugs entlang der Strecke verwendbar ist.

In erfindungsgemäßer Weise ist zunächst erkannt worden, dass durch geschickte Beleuchtung der Markierung die voranstehende Aufgabe auf überraschend einfache Weise gelöst wird. Hierzu ist in weiter erfindungsgemäßer Weise eine Beleuchtung realisiert, die die Markierung mit einem ersten Beleuchtungslicht und einem zweiten Beleuchtungslicht unterschiedlicher Wellenlänge und jeweils vorgebbarer Zeitdauer in einer vorgebbaren Reihenfolge beleuchtet. Dabei sind weiter erfindungsgemäß die Wellenlänge des ersten Beleuchtungslichts und die Wellenlänge des zweiten Beleuchtungslichts derart gewählt, dass die Markierung für den Detektor aufgrund ihres durch ihre Ausgestaltung vorliegenden und definierbaren Remissionsspektrums für Beleuchtungslicht bei Beleuchtung mit dem ersten Beleuchtungslicht mit einer Helligkeit oder Dunkelheit erkennbar ist, die sich von der Helligkeit oder Dunkelheit bei Beleuchtung mit dem zweiten Beleuchtungslicht unterscheidet. Der Detektor kann dabei erkennen, ob die Markierung mit dem ersten oder mit dem zweiten Beleuchtungslicht beleuchtet wird, wobei es bei der Wahl des ersten und zweiten Beleuchtungslichts ein Ziel sein kann, den Unterschied in der Helligkeit oder Dunkelheit, der durch den Wechsel vom ersten Beleuchtungslicht zum zweiten Beleuchtungslicht oder umgekehrt erzeugt wird, möglichst groß und vorzugsweise möglichst kontrastreich zu gestalten. Bei einer einen Code mit unterschiedlichen Farbelementen aufweisenden Markierung kann es somit ein Ziel sein, mit dem einen Beleuchtungslicht eine Farbe des Codes möglichst dunkel und eine andere Farbe möglichst hell oder umgekehrt darzustellen. Mit dem anderen Beleuchtungslicht kann es sich hierzu komplementär verhalten. Ziel kann es hierbei sein, einen möglichst hohen Kontrast zwischen einer dunklen und einer hellen Abbildung unter einer jeweiligen Beleuchtungsfarbe oder unter einem jeweiligen Beleuchtungslicht zu erzielen. Durch diese vorgebbare Beleuchtungsabfolge mit dem ersten Beleuchtungslicht und dem zweiten Beleuchtungslicht wird eine definierte Remission von der Markierung erzeugt, die von dem Detektor empfangen wird. Der Detektor verwendet dieses Detektionsergebnis - beispielsweise mittels einer geeigneten Steuereinrichtung oder Führungseinrichtung - zur Führung des Fahrzeugs entlang der Strecke, wobei er das empfangene Detektionsergebnis mit dem ihm - beispielsweise durch die obige Steuereinrichtung oder Führungseinrichtung oder eine geeignete weitere Steuereinrichtung - bekannt gegebenen und aufgrund der definierten Remission zu erwartenden Detektionsergebnis vergleichen kann. Entspricht das empfangene Detektionsergebnis dem erwarteten Detektionsergebnis, so befindet sich das Fahrzeug auf oder entlang der vorbestimmbaren, richtigen Strecke und kann entsprechend korrekt entlang der vorbestimmbaren Strecke weitergeführt werden. Hierbei kann eine Positionsbestimmung des Detektors oder Fahrzeugs relativ zur Markierung erfolgen. Falls das empfangene Detektionsergebnis dem erwarteten Detektionsergebnis nicht entsprechen sollte, so kann - beispielsweise mit der obigen Steuereinrichtung oder Führungseinrichtung - eine Korrektur hinsichtlich der Führung erfolgen, um das Fahrzeug wieder auf korrekten Kurs entlang der vorbestimmbaren Strecke zu bringen. Letztendlich kann hierdurch eine eindeutige Identifizierung oder Erkennung einer Markierung oder Spur mit einer Abgrenzung gegen "falsche Markierungen" oder "falsche Spuren" erfolgen.

Folglich sind mit dem erfindungsgemäßen Verfahren und der erfindungsgemäßen Vorrichtung ein Verfahren und eine Vorrichtung bereitgestellt, wonach eine besonders sichere Führung eines Fahrzeugs auf einem Untergrund mit konstruktiv einfachen Mitteln ermöglicht ist.

Hinsichtlich eines besonders einfachen Ausführungsbeispiels des Verfahrens kann die Markierung für den Detektor aufgrund ihres definierbaren Remissionsspektrums bei Beleuchtung mit dem ersten Beleuchtungslicht erkennbar und bei Beleuchtung mit dem zweiten Beleuchtungslicht nicht erkennbar oder umgekehrt sein. Hiermit ist ein besonders großer Unterschied bei einer Beleuchtung mit dem ersten Beleuchtungslicht und bei einer Beleuchtung mit dem zweiten Beleuchtungslicht für den Detektor erzeugt.

Im Hinblick auf eine besonders zuverlässige und sichere Führung des Fahrzeugs kann anhand des Detektionsergebnisses bestimmt werden, ob sich das Fahrzeug noch in einem definierbaren räumlichen oder flächigen Bereich um die Markierung oder noch in einem definierbaren Abstand zur Markierung befindet. Ein derartiger Bereich oder Abstand kann in Abhängigkeit vom jeweiligen Anwendungsfall und den jeweiligen Umgebungsbedingungen, beispielsweise eine räumliche Enge, weiter oder enger definiert werden. Zur Realisierung einer möglichst geringen versehentlichen Abweichung der Bewegung des Fahrzeugs von der vorbestimmbaren Strecke und damit einer möglichst exakten Führung des Fahrzeugs entlang der Strecke kann der Bereich oder Abstand relativ klein gewählt werden.

Zur Realisierung einer besonders einfachen und sicheren Führung des Fahrzeugs kann die Beleuchtungseinrichtung dem Fahrzeug zugeordnet, an dem Fahrzeug angeordnet oder in das Fahrzeug integriert sein. Damit lässt sich eine besonders kompakte Vorrichtung zur Führung eines Fahrzeugs ohne eine von dem Fahrzeug gegebenenfalls weit beabstandete Beleuchtungseinrichtung realisieren. Bei einer weiteren Ausführungsform kann die Beleuchtungseinrichtung jedoch auch separat vom Fahrzeug an geeigneter Position entlang der Strecke realisiert sein.

Weiterhin im Hinblick auf eine besonders kompakte und damit einfach handhabbare Vorrichtung und ein einfach handhabbares Verfahren kann die Beleuchtungseinrichtung integral mit dem Detektor oder in einem Modul mit dem Detektor ausgebildet sein. Hierbei kann ein integraler Beleuchtungs-/Detektorkopf realisiert werden, der sowohl die Beleuchtungseinrichtung als auch den Detektor aufweist. Dabei kann der Detektor

In konstruktiv besonders einfacher Weise kann der Detektor eine monochrome Kamera aufweisen, mit der zu vorgebbaren Zeitpunkten eine oder mehrere Bildaufnahmen durchführbar sind. Eine solche Kamera kann auf einfache und ökonomische Weise auch zum Erkennen und/oder Auslesen von auf dem Untergrund angeordneten Codes zur Positionsbestimmung dienen, wobei hierfür üblicherweise monochrome Kameras verwendet werden. Insoweit kann die monochrome Kamera des Detektors eine Doppelfunktion übernehmen und es ist in kostengünstiger Weise nicht erforderlich, zwei separate Kameras für einerseits eine Führung und andererseits eine Positionsbestimmung zu verwenden.

Im Hinblick auf eine besonders sichere Führung eines Fahrzeugs ist die Markierung in konstruktiv einfacher Weise streifenförmig mit einer Spur oder einem Streifen oder mehreren Spuren oder Streifen ausgebildet, wobei sich vorzugsweise die streifenförmige Markierung parallel zu der Strecke erstreckt. Alternativ hierzu kann sich die streifenförmige Markierung oder können sich die Spuren oder Streifen auch quer oder schräg zur Fahrtrichtung erstrecken. Derartige streifenförmige Markierungen lassen sich üblicherweise einfach mit einem Detektor erkennen.

In besonders vorteilhafter Weise können die mehreren Spuren oder Streifen unterschiedliche Remissionsspektren aufweisen. Hierdurch lässt sich eine besonders individuelle und damit aussagekräftige Kombination aus Beleuchtung und Remission erzeugen, um eine besonders sichere Identifizierung einer oder mehrerer Markierungen oder Spuren oder Streifen mittels des Detektors zu gewährleisten.

Bei einer konkreten Ausführungsform können bei der Verwendung von drei nebeneinander verlaufenden Spuren oder Streifen zwei Spuren oder Streifen - vorzugsweise die beiden äußeren Spuren oder Streifen - dasselbe Remissionsspektrum aufweisen. Mittels dreier nebeneinander verlaufender Spuren oder Streifen lässt sich eine besonders starke Unabhängigkeit von einer Farbe des Untergrunds oder Bodens und damit eine besonders sichere Identifizierung einer oder mehrerer Markierungen oder Spuren oder Streifen mittels des Detektors realisieren.

Weiterhin im Hinblick auf eine besonders sichere Identifizierung einer oder mehrerer Markierungen oder Spuren oder Streifen und damit im Hinblick auf eine besonders sichere Führung eines Fahrzeugs kann der Detektor die Anzahl der einzelnen Spuren oder Streifen und/oder die Breite der einzelnen Spuren oder Streifen erkennen. Hierdurch ist bei Bekanntheit der Anzahl und/oder Breite der einzelnen Spuren oder Streifen eine besonders gute Abgrenzung gegen "falsche Markierungen" oder "falsche Spuren oder Streifen" möglich, die bezüglich Anzahl und/oder Breite oft stark variieren.

In weiter vorteilhafter Weise kann die Markierung einzelne Codeelemente aufweisen. Hierdurch kann eine ökonomische Kombination von Markierungen zur Führung und Codeelementen zur Positionsbestimmung realisiert werden. Beispielsweise bei begrenztem Raumbedarf auf einem Untergrund ist eine solche Kombination vorteilhaft.

Ganz grundsätzlich kann eine Positionsbestimmung des Fahrzeugs und/oder des Detektors relativ zu der Markierung, insbesondere zu einer Spur oder einem Streifen, erfolgen. Hierbei ist eine Positionierung oder Positionsbestimmung anhand der Markierung oder anhand einer Spur oder eines Streifens in Querrichtung - Y-Richtung - zur Spurrichtung oder Fahrtrichtung - X-Richtung - des Fahrzeugs vorteilhaft. Eine hieraus folgende Y-Position kann die Navigation mittels der Markierung, insbesondere anhand einer Spur oder eines Streifens, auf sichere Weise ermöglichen. Grundsätzlich wird mit einer Positionsbestimmung das Ziel erreicht, eine Y-Position, d. h. eine Position quer zu einer Spur oder einem Streifen, sicher zu erhalten, welche sich je nach Beleuchtung oder bei sich veränderndem Beleuchtungslicht nicht ändert.

Im Hinblick auf die Realisierung eines besonders individuellen Beleuchtungsszenarios kann die vorgebbare Reihenfolge an erstem und zweitem Beleuchtungslicht eine unregelmäßige Abfolge oder einen unregelmäßigen Wechsel von erstem und zweitem Beleuchtungslicht aufweisen. Hierdurch ist eine besonders sichere Identifizierung einer Markierung und damit Führung eines Fahrzeugs möglich.

Grundsätzlich gibt es unterschiedliche Möglichkeiten, eine Beleuchtung mittels der Beleuchtungseinrichtung zu realisieren. Bei einem konkreten Ausführungsbeispiel können oder kann das erste und/oder das zweite Beleuchtungslicht monochromatisch sein oder ist oder mehrere Wellenlängen oder ein Wellenlängenspektrum aufweisen. Hierbei ist auf den jeweiligen Anwendungsfall abzustellen. Bei einem monochromatischen Beleuchtungslicht ist eine besonders zuverlässige und sichere Erkennung von Markierungen mittels des Detektors möglich.

Vorteilhafte Aspekte und Eigenschaften von Ausführungsbeispielen der vorliegenden Erfindung:
Der im Rahmen des Verfahrens und der Vorrichtung verwendete Detektor kann ein Kamerasystem mit einer monochromen Kamera aufweisen. Eine Farbkamera ist nicht erforderlich. D. h., es werden Bilder in Graustufen aufgenommen. Grundsätzlich ist damit keine eindeutige Farberkennung für eine Führung eines Fahrzeugs oder eine Spurverfolgung möglich. Viele, durchaus unterschiedliche Farben werden mit den gleichen Grauwerten dargestellt. Somit werden weitere Merkmale für eine Spurverfolgung verwendet.

So können beispielsweise zwei Beleuchtungsfarben bzw. Beleuchtungswellenlängen verwendet werden, die abwechselnd oder in einer vorgebbaren Reihenfolge und Zeitdauer angeschaltet und abgeschaltet werden können. Diese Farbumschaltung bzw. Wellenlängenumschaltung wird bei der Erkennung der Markierung oder Spurerkennung genutzt. Durch die wechselnde Beleuchtung werden Teile der Markierung oder die gesamte Markierung ausgeblendet oder eingeblendet und es entstehen je nach Beleuchtungsfarbe bzw. Beleuchtungswellenlängen unterschiedliche Bilder bei einer Bildaufnahme durch den Detektor oder die Kamera. Ein entsprechend gewählter Detektor oder ein entsprechend gewählter Decoder in dem Detektor oder eine entsprechend gewählte Auswerteeinrichtung in dem Detektor oder in der Kamera weiß nicht, welche Beleuchtungsfarbe oder Beleuchtungswellenlänge für die Markierung von einem Sicherheits-Chip oder von einer entsprechenden Steuereinrichtung gewählt worden ist, sondern kann diese Information lediglich aus dem Bild bzw. der Bildaufnahme und den entsprechend gelesenen Informationen ableiten. Somit fungiert der Detektor, der Decoder, die Auswerteeinrichtung oder die Kamera quasi als ein "schwarzer Kanal" zwischen einer sicheren Information in einer Markierung und einem Sicherheits-Chip oder einer entsprechenden Steuereinrichtung, der oder die das Verfahren oder die Auswertung von Sicherheitsfunktionen durchführt.

Bei Ausführungsbeispielen der vorliegenden Erfindung können beispielsweise zwei Farben von Codeelementen oder Codes oder Bändern oder Spuren genutzt werden, um ein mehrfarbiges Spurband oder eine mehrfarbige Markierung oder Spur zu definieren. Hierzu können zwei oder drei farbige Bänder oder Streifen nebeneinander auf einem Untergrund oder Boden aufgebracht werden. Die wechselnde Beleuchtung kann hierbei nun einen Szenenwechsel je nach Beleuchtungslicht oder Beleuchtung erzeugen und die Markierung oder Spur kann damit eindeutig identifiziert werden. Dabei kann - nach einer initialen Erkennung der Markierung oder Spur - mit jedem aufgenommenen Bild oder jedem einzelnen Detektionsvorgang die Position der Markierung oder Spur bestimmbar sein.

Mit Ausführungsbeispielen der vorliegenden Erfindung ist eine eindeutige Erkennung einer Markierung oder korrekten Spur durch ständig wechselnde Bilder möglich. "Falsche Spuren" werden eindeutig herausgefiltert, da diese sich in der Regel nicht signifikant mit der Beleuchtungsfarbe ändern.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Verfahrens sowie der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel einer Ausgestaltung einer einstreifigen Markierung zur Verwendung bei dem erfindungsgemäßen Verfahren,
- Fig. 2: in einer schematischen Darstellung ein Ausführungsbeispiel einer Ausgestaltung einer zweistreifigen Markierung zur Verwendung bei dem erfindungsgemäßen Verfahren,
- Fig. 3: in einer schematischen Darstellung die Szene im unteren Bereich der Fig. 2, jedoch hier mit hellem Hintergrund,
- Fig. 4: in einer schematischen Darstellung ein Ausführungsbeispiel einer Ausgestaltung einer dreistreifigen Markierung zur Verwendung bei dem erfindungsgemäßen Verfahren und
- Fig. 5: in einer schematischen Darstellung die Szene im unteren Bereich der Fig. 4, jedoch hier mit hellem Hintergrund.

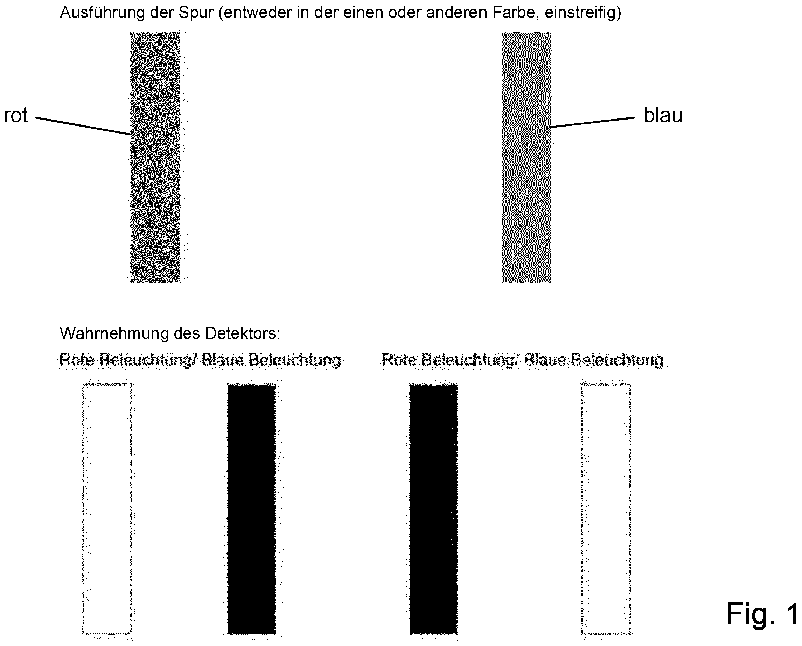

Fig. 1 zeigt in einer schematischen Darstellung ein Ausführungsbeispiel einer einstreifigen Markierung zur Verwendung bei dem erfindungsgemäßen Verfahren, wobei im linken Teil der Fig. 1 eine rötliche Spur und alternativ hierzu im rechten Teil der Fig. 1 eine blaue Spur gezeigt sind. Jeweils im unteren Bereich der Fig. 1 wird gezeigt, wie sich die Wahrnehmung der jeweiligen Spuren bei einerseits roter und andererseits blauer Beleuchtung für einen Detektor mit einer monochromen Kamera darstellt. Bei roter Beleuchtung der rötlichen Spur nimmt der Detektor nichts wahr. Bei blauer Beleuchtung der rötlichen Spur hingegen nimmt der Detektor einen dunklen Streifen wahr. Bei der rechts dargestellten blauen Spur nimmt der Detektor bei blauer Beleuchtung nichts wahr. Bei roter Beleuchtung hingegen nimmt der Detektor einen dunklen Streifen wahr. Die jeweiligen Spuren oder Streifen erstrecken sich entlang einer vorgebbaren Strecke zur Führung eines Fahrzeugs.

Bei wechselnder Beleuchtung mit unterschiedlichem Beleuchtungslicht in unregelmäßiger Reihenfolge - Wechsel von rotem und blauem Beleuchtungslicht - ändert sich die Szene und die Wahrnehmung des Detektors mit jedem Beleuchtungswechsel. Dadurch kann die Markierung oder Spur eindeutig als Markierung oder Spur identifiziert und von "falschen Spuren" oder "Scheinspuren" unterschieden werden.

Bei der Verwendung nur einer Spur bzw. Spurfarbe wird die Spur je nach Beleuchtungsfarbe erkannte oder nicht. Dabei können unterschiedliche geeignete Farben wie beispielsweise SIL-Farben wie bei einem Code-Band verwendet werden. Bei der Verwendung anderer geeigneter Farben ist die Wahrnehmung durch den Detektor je nach Beleuchtungsfarbe ebenfalls unterschiedlich.

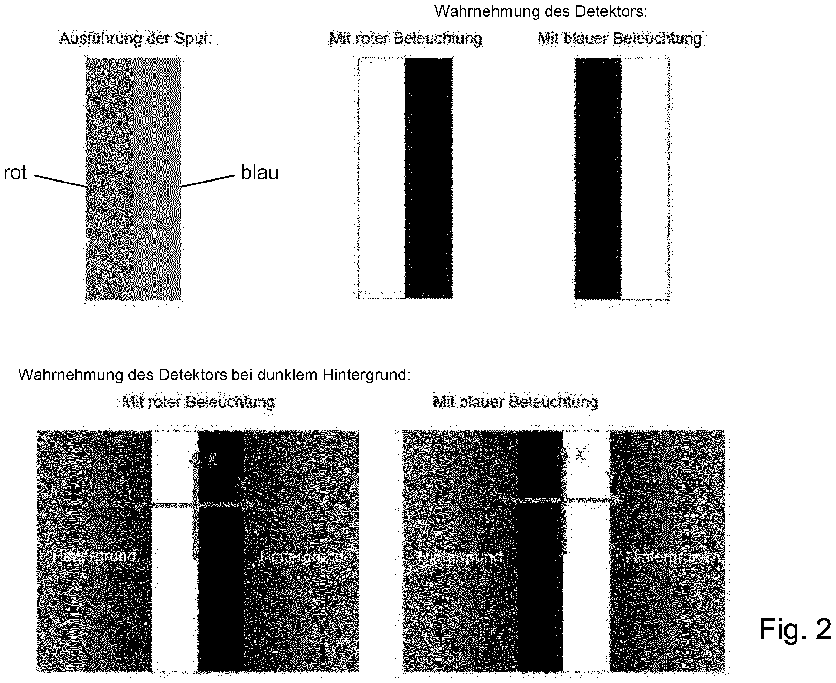

Fig. 2 zeigt in einer schematischen Darstellung ein Ausführungsbeispiel einer Ausgestaltung einer zweistreifigen Markierung zur Verwendung bei dem erfindungsgemäßen Verfahren, wobei hier quasi eine Spur mit einer Kombination aus zwei aneinander angrenzenden einzelnen Streifen realisiert ist, die sich entlang der vorgebbaren Strecke zur Führung des Fahrzeugs erstreckt. Der linke Streifen ist rötlich und der rechte Streifen blau ausgebildet. In Fig. 2 ist des Weiteren die Wahrnehmung der Spur durch einen Detektor mit einer monochromen Kamera bei unterschiedlicher Beleuchtung, nämlich einerseits rotem Beleuchtungslicht und andererseits blauem Beleuchtungslicht, gezeigt. Mit rotem Beleuchtungslicht wird der blaue Streifen als dunkler Streifen wahrgenommen und mit blauem Beleuchtungslicht wird der rötliche Streifen als dunkler Streifen vom Detektor wahrgenommen.

Im unteren Bereich der Fig. 2 ist die Wahrnehmung der Spur durch den Detektor gezeigt, wobei die Spur hierbei auf einem dunklen Hintergrund angeordnet ist. Hierbei kann die Spur anhand eines durch einen Wechsel der Beleuchtung von rotem zu blauem Beleuchtungslicht erzeugten "Sprunges" der Wahrnehmung durch den Detektor - von einem Streifen zum andern Streifen - in eine Y-Richtung eindeutig erkannt werden. Zur eindeutigen Erkennung ist die vorherige Aufnahme mehrerer entsprechender Bilder mit unterschiedlichem Beleuchtungslicht von Nutzen.

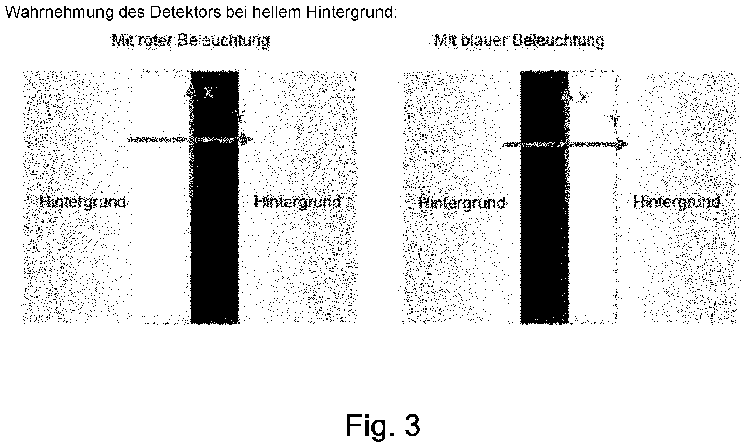

Fig. 3 zeigt in einer schematischen Darstellung die Szene wie im unteren Bereich der Fig. 2, jedoch hier mit hellem Hintergrund. Auch hierbei kann die Spur anhand eines durch einen Wechsel der Beleuchtung von rotem zu blauem Beleuchtungslicht erzeugten "Sprunges" der Wahrnehmung durch den Detektor - von einem Streifen zum andern Streifen - in eine Y-Richtung eindeutig erkannt werden. Zur eindeutigen Erkennung ist auch hier die vorherige Aufnahme mehrerer entsprechender Bilder mit unterschiedlichem Beleuchtungslicht von Nutzen.

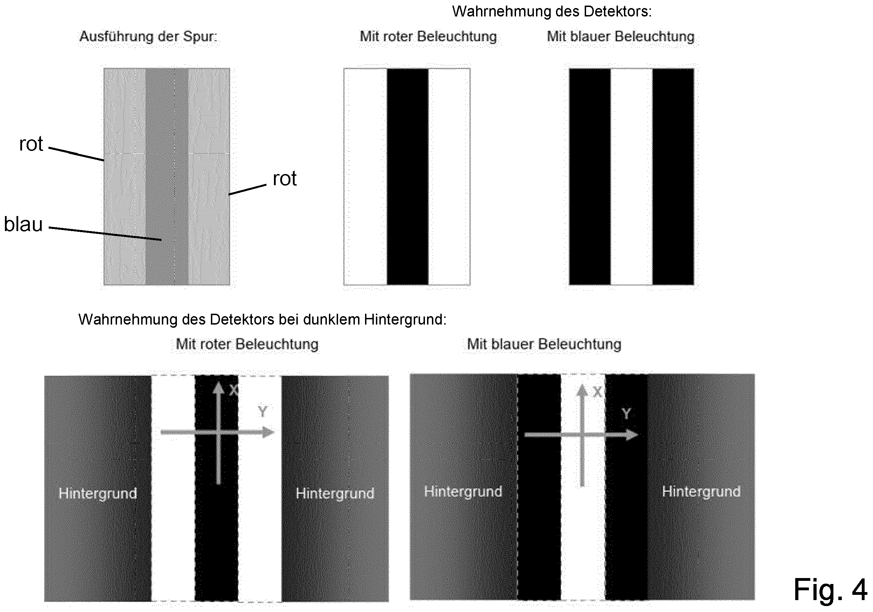

Fig. 4 zeigt in einer schematischen Darstellung ein Ausführungsbeispiel einer Ausgestaltung einer dreistreifigen Markierung zur Verwendung bei dem erfindungsgemäßen Verfahren, wobei hier quasi eine Spur mit einer Kombination aus drei aneinander angrenzenden einzelnen Streifen realisiert ist, die sich entlang der vorgebbaren Strecke zur Führung des Fahrzeugs erstreckt. Der linke Streifen und der rechte Streifen sind rötlich und der mittlere Streifen blau ausgebildet. In Fig. 4 ist des Weiteren die Wahrnehmung der Spur durch einen Detektor mit einer monochromen Kamera bei unterschiedlicher Beleuchtung, nämlich einerseits rotem Beleuchtungslicht und andererseits blauem Beleuchtungslicht, gezeigt. Mit rotem Beleuchtungslicht wird der blaue Streifen als dunkler Streifen wahrgenommen und mit blauem Beleuchtungslicht werden die rötlichen Streifen als dunkle Streifen vom Detektor wahrgenommen.

Im unteren Bereich der Fig. 4 ist die Wahrnehmung der Spur durch den Detektor gezeigt, wobei die Spur hierbei auf einem dunklen Hintergrund angeordnet ist. Hierbei kann die Spur anhand eines durch einen Wechsel der Beleuchtung von rotem zu blauem Beleuchtungslicht erzeugten Wechsels der Wahrnehmung durch den Detektor - von zwei hellen Streifen zu einem hellen Streifen - eindeutig erkannt werden.

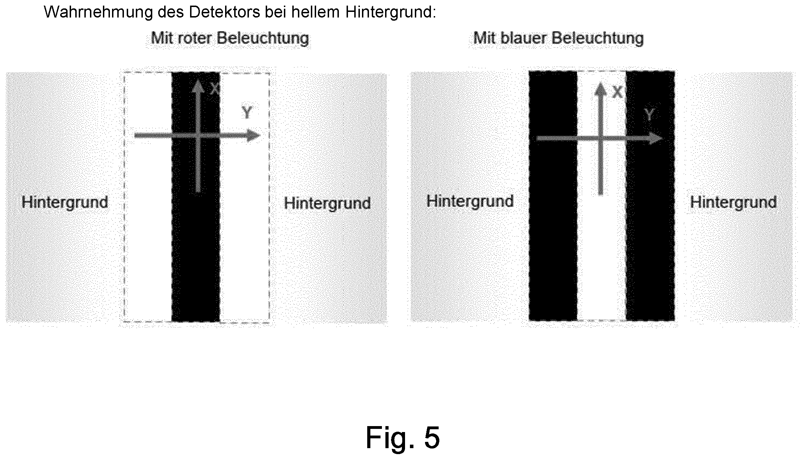

Fig. 5 zeigt in einer schematischen Darstellung die Szene wie im unteren Bereich der Fig. 4, jedoch hier mit hellem Hintergrund. Auch hierbei kann die Spur anhand eines durch einen Wechsel der Beleuchtung von rotem zu blauem Beleuchtungslicht erzeugten Wechsels der Wahrnehmung durch den Detektor - von einem dunklen Streifen zu zwei dunklen Streifen - eindeutig erkannt werden.

Bei einer Ausführung der Spur mit mindestens drei Streifen wird eine Unabhängigkeit von der Farbe des Untergrunds oder Bodens gewährleistet.

Es ist grundsätzlich möglich, eine Spur auch mit mehr als drei Streifen oder Farbstreifen auszuführen. Dies führt zu einem eindeutigeren Abheben vom Hintergrund oder Untergrund. Ebenso kann über unterschiedliche Zusammensetzungen der Spuren oder Farbspuren eine Information codiert werden. Beispielsweise kann der Detektor zurückmelden, wie viele Streifen die Spur enthält und somit eine Information über die jeweilige Strecke weitergeben. Ebenfalls ist eine Codierung über unterschiedliche Breiten der Farbstreifen möglich.

Die Spuren oder Farbspuren können auf unterschiedliche Weise realisiert werden. Beispielsweise kann ein Band, zum Beispiel ein PVC-Band, mit unterschiedlichen Farben bedruckt werden. Alternativ hierzu kann das Band hinsichtlich seines Grundmaterials in einer gewünschten Farbe realisiert sein und mit einer weiteren Farbe bedruckt werden. Eine solche Spur ist günstig und schnell aufzubringen und einfach zu entfernen. Des Weiteren ist eine Kurvenverlegung einfach. Das Band kann auch mittels Polycarbonat realisiert werden.

Alternativ zu einem Band kann eine Spur oder Farbspur durch eine Lackierung mit beispielsweise nebeneinander lackierten Streifen realisiert werden. Im Fall einer Spur mit drei Streifen kann erst die äußere Farbe vollflächig lackiert und dann in der Mitte der Streifen darüber lackiert werden. Eine solche Spur ist dauerhaft, robust und auch bedingt für den Outdoor-Betrieb tauglich.

Als weitere Alternative kann eine Spur durch farbig bedruckte Metallstreifen, beispielsweise Aluminiumstreifen, realisiert werden. Auch hierdurch lässt sich eine dauerhafte Spur bereitstellen. Die Herstellungsmethode kann einen Untereloxaldruck aufweisen.

Als weitere Alternative können beide Spurfarben, d. h. beide Farbstreifen, jeweils als Streifen aus einem Thermoplasten realisiert werden. Diese Streifen werden entsprechend zwei- oder dreistreifig nebeneinandergelegt und durch Erhitzen mit dem Untergrund verschmolzen. Eine Verschmelzung in einer Bodennut ist ebenfalls möglich. Hierdurch wird eine sehr robuste und dauerhafte Markierung realisiert, die auch outdoor-tauglich ist.

Hinsichtlich weiterer vorteilhafter Ausgestaltungen des erfindungsgemäßen Verfahrens sowie der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. Verfahren zur Führung eines Fahrzeugs auf einem Untergrund, wobei das Fahrzeug mittels einer auf dem Untergrund zumindest abschnittsweise angeordneten Markierung und einem zur Erkennung der Markierung ausgebildeten und dem Fahrzeug zugeordneten Detektor entlang einer vorbestimmbaren Strecke geführt wird, wobei zur Erkennung der Markierung auf dem Untergrund die Markierung mittels einer Beleuchtungseinrichtung mit einem ersten Beleuchtungslicht und einem zweiten Beleuchtungslicht unterschiedlicher Wellenlänge und jeweils vorgebbarer Zeitdauer in einer vorgebbaren Reihenfolge beleuchtet wird,
wobei die Wellenlänge des ersten Beleuchtungslichts und die Wellenlänge des zweiten Beleuchtungslichts derart gewählt werden, dass die Markierung für den Detektor aufgrund ihres definierbaren Remissionsspektrums bei Beleuchtung mit dem ersten Beleuchtungslicht mit einer Helligkeit oder Dunkelheit erkennbar ist, die sich von der Helligkeit oder Dunkelheit bei Beleuchtung mit dem zweiten Beleuchtungslicht unterscheidet, und
wobei ein durch den Detektor ermitteltes entsprechendes Detektionsergebnis zur Führung des Fahrzeugs entlang der Strecke verwendet wird,
**dadurch gekennzeichnet, dass** die Markierung streifenförmig mit einer Spur oder mehreren Spuren oder Streifen ausgebildet ist.

2. Verfahren nach Anspruch 1, **dadurch gekennzeichnet, dass** die Markierung für den Detektor aufgrund ihres definierbaren Remissionsspektrums bei Beleuchtung mit dem ersten Beleuchtungslicht erkennbar und bei Beleuchtung mit dem zweiten Beleuchtungslicht nicht erkennbar oder umgekehrt ist.

3. Verfahren nach Anspruch 1 oder 2, **dadurch gekennzeichnet, dass** anhand des Detektionsergebnisses bestimmt wird, ob sich das Fahrzeug noch in einem definierbaren räumlichen oder flächigen Bereich um die Markierung oder noch in einem definierbaren Abstand zur Markierung befindet.

4. Verfahren nach einem der Ansprüche 1 bis 3, **dadurch gekennzeichnet, dass** die Beleuchtungseinrichtung dem Fahrzeug zugeordnet, an dem Fahrzeug angeordnet oder in das Fahrzeug integriert ist.

5. Verfahren nach einem der Ansprüche 1 bis 4, **dadurch gekennzeichnet, dass** die Beleuchtungseinrichtung integral mit dem Detektor oder in einem Modul mit dem Detektor ausgebildet ist.

6. Verfahren nach einem der Ansprüche 1 bis 5, **dadurch gekennzeichnet, dass** der Detektor eine monochrome Kamera aufweist.

7. Verfahren nach einem der Ansprüche 1 bis 6, **dadurch gekennzeichnet, dass** sich die streifenförmige Markierung parallel zu der Strecke erstreckt.

8. Verfahren nach einem der Ansprüche 1 bis 7, **dadurch gekennzeichnet, dass** die mehreren Spuren oder Streifen unterschiedliche Remissionsspektren aufweisen.

9. Verfahren nach einem der Ansprüche 1 bis 8, **dadurch gekennzeichnet, dass** bei der Verwendung von drei nebeneinander verlaufenden Spuren oder Streifen zwei Spuren oder Streifen - vorzugsweise die beiden äußeren Spuren oder Streifen - dasselbe Remissionsspektrum aufweisen.

10. Verfahren nach einem der Ansprüche 1 bis 9, **dadurch gekennzeichnet, dass** der Detektor die Anzahl der einzelnen Spuren oder Streifen und/oder die Breite der einzelnen Spuren oder Streifen erkennt.

11. Verfahren nach einem der Ansprüche 1 bis 10, **dadurch gekennzeichnet, dass** die Markierung einzelne Codeelemente aufweist.

12. Verfahren nach einem der Ansprüche 1 bis 11, **dadurch gekennzeichnet, dass** die vorgebbare Reihenfolge an erstem und zweitem Beleuchtungslicht eine unregelmäßige Abfolge oder einen unregelmäßigen Wechsel von erstem und zweitem Beleuchtungslicht aufweist.

13. Verfahren nach einem der Ansprüche 1 bis 12, **dadurch gekennzeichnet, dass** das erste und/oder das zweite Beleuchtungslicht monochromatisch sind oder ist oder mehrere Wellenlängen oder ein Wellenlängenspektrum aufweisen oder aufweist.

14. Vorrichtung zur Führung eines Fahrzeugs auf einem Untergrund, insbesondere zur Durchführung des Verfahrens nach einem der Ansprüche 1 bis 13, wobei das Fahrzeug mittels einer auf dem Untergrund zumindest abschnittsweise angeordneten Markierung und einem zur Erkennung der Markierung ausgebildeten und dem Fahrzeug zugeordneten Detektor entlang einer vorbestimmbaren Strecke führbar ist, wobei zur Erkennung der Markierung auf dem Untergrund die Markierung mittels einer Beleuchtungseinrichtung mit einem ersten Beleuchtungslicht und einem zweiten Beleuchtungslicht unterschiedlicher Wellenlänge und jeweils vorgebbarer Zeitdauer in einer vorgebbaren Reihenfolge beleuchtbar ist,
wobei die Wellenlänge des ersten Beleuchtungslichts und die Wellenlänge des zweiten Beleuchtungslichts derart gewählt sind, dass die Markierung für den Detektor aufgrund ihres definierbaren Remissionsspektrums bei Beleuchtung mit dem ersten Beleuchtungslicht mit einer Helligkeit oder Dunkelheit erkennbar ist, die sich von der Helligkeit oder Dunkelheit bei Beleuchtung mit dem zweiten Beleuchtungslicht unterscheidet, und
wobei ein durch den Detektor ermitteltes entsprechendes Detektionsergebnis mittels einer Führungseinrichtung zur Führung des Fahrzeugs entlang der Strecke verwendbar ist,
**dadurch gekennzeichnet, dass** die Markierung streifenförmig mit einer Spur oder mehreren Spuren oder Streifen ausgebildet ist.

## Claims

1. Method for guiding a vehicle on a substrate, wherein the vehicle is guided along a predetermined path by means of a marking which is at least partially arranged on the substrate, and a detector which is constructed to identify the marking and which is associated with the vehicle, wherein in order to identify the marking on the substrate the marking is illuminated by means of an illumination device having a first illumination light and a second illumination light having a different wavelength and predeterminable duration in each case in a predeterminable sequence,
wherein the wavelength of the first illumination light and the wavelength of the second illumination light are selected in such a manner that the marking for the detector as a result of the definable remission spectrum thereof during illumination with the first illumination light can be identified with a brightness or darkness which differs from the brightness or darkness when illuminated with the second illumination light, and
wherein a corresponding detection result which has been established by the detector is used to guide the vehicle along the path,
**characterised in that** the marking is formed in a stripe-like manner with one track or a plurality of tracks or stripes.

2. Method according to claim 1, **characterised in that** the marking for the detector as a result of the definable remission spectrum thereof can be identified when illuminated with the first illumination light and cannot be identified when illuminated with the second illumination light, or vice versa.

3. Method according to claim 1 or 2, **characterised in that** it is determined with reference to the detection result whether the vehicle is still located in a definable spatial or surface region around the marking or still located with a definable spacing with respect to the marking.

4. Method according to any one of claims 1 to 3,
**characterised in that** the illumination device is associated with the vehicle, is arranged on the vehicle or is integrated in the vehicle.

5. Method according to any one of claims 1 to 4,
**characterised in that** the illumination device is constructed integrally with the detector or in a module with the detector.

6. Method according to any one of claims 1 to 5,
**characterised in that** the detector has a monochrome camera.

7. Method according to any one of claims 1 to 6,
**characterised in that** the stripe-like marking extends parallel with the path.

8. Method according to any one of claims 1 to 7,
**characterised in that** the plurality of tracks or stripes have different remission spectrums.

9. Method according to any one of claims 1 to 8,
**characterised in that**, when three tracks or stripes which extend beside each other are used, two tracks or stripes - preferably the two outer tracks or stripes - have the same remission spectrum.

10. Method according to any one of claims 1 to 9,
**characterised in that** the detector identifies the number of individual tracks or stripes and/or the width of the individual tracks or stripes.

11. Method according to any one of claims 1 to 10,
**characterised in that** the marking has individual code elements.

12. Method according to any one of claims 1 to 11,
**characterised in that** the predeterminable sequence for the first and second illumination light has an irregular sequence or an irregular change of the first and second illumination light.

13. Method according to any one of claims 1 to 12,
**characterised in that** the first and/or the second illumination light is/are monochromatic or has/have a plurality of wavelengths or a wavelength spectrum.

14. Apparatus for guiding a vehicle on a substrate, in particular for carrying out the method according to any one of claims 1 to 13, wherein the vehicle can be guided along a predeterminable path by means of a marking which is at least partially arranged on the substrate and a detector which is constructed to identify the marking and which is associated with the vehicle, wherein in order to identify the marking on the substrate the marking is illuminated by means of an illumination device having a first illumination light and a second illumination light having a different wavelength and predeterminable duration in each case in a predeterminable sequence,
wherein the wavelength of the first illumination light and the wavelength of the second illumination light are selected in such a manner that the marking for the detector as a result of the definable remission spectrum thereof during illumination with the first illumination light can be identified with a brightness or darkness which differs from the brightness or darkness when illuminated with the second illumination light, and
wherein a corresponding detection result which has been established by the detector can be used by a guide device to guide the vehicle along the path,
**characterised in that** the marking is formed in a stripe-like manner with one track or a plurality of tracks or stripes.

## Revendications

1. Procédé de guidage d'un véhicule sur un terrain, dans lequel le véhicule est guidé au moyen d'un marquage disposé au moins à certains endroits sur le terrain et d'un détecteur conçu pour la détection du marquage et disposé sur le détecteur, le long d'un trajet pouvant être prédéterminé, dans lequel, pour la détection du marquage sur le terrain, le marquage est éclairé au moyen d'un dispositif d'éclairage avec une première lumière d'éclairage et d'une deuxième lumière d'éclairage de longueurs d'ondes différentes et de durées pouvant respectivement être prédéterminées dans un ordre pouvant être prédéterminé,
dans lequel la longueur d'onde de la première lumière d'éclairage et la longueur d'onde de la deuxième lumière d'éclairage sont choisies de sorte que le marquage puisse être reconnu par le détecteur sur la base de son spectre de rémission, pouvant être défini lors de l'éclairage avec la première lumière d'éclairage avec une luminosité ou une obscurité, qui se distingue de la luminosité ou de l'obscurité lors de l'éclairage avec la deuxième lumière d'éclairage et
dans lequel un résultat de détection correspondant déterminé par le détecteur est utilisé pour le guidage du véhicule le long du trajet,
**caractérisé en ce que** le marquage présente la forme d'une bande avec une piste ou plusieurs pistes ou des bandes.

2. Procédé selon la revendication 1, **caractérisé en ce que** le marquage peut être reconnu par le détecteur sur la base de son spectre de rémission lors de l'éclairage avec la première lumière d'éclairage et ne peut pas être reconnu lors de l'éclairage avec la deuxième lumière d'éclairage ou inversement.

3. Procédé selon la revendication 1 ou 2, **caractérisé en ce que**, à l'aide du résultat de détection, il est déterminé si le véhicule se trouve encore dans une zone spatiale ou plane pouvant être définie autour du marquage ou encore à une distance, pouvant être définie, par rapport au marquage.

4. Procédé selon l'une des revendications 1 à 3, **caractérisé en ce que** le dispositif d'éclairage correspond au véhicule, est disposé sur le véhicule ou est intégré dans le véhicule.

5. Procédé selon l'une des revendications 1 à 4, **caractérisé en ce que** le dispositif d'éclairage est réalisé de manière intégrale avec le détecteur ou est disposé dans un module avec le détecteur.

6. Procédé selon l'une des revendications 1 à 5, **caractérisé en ce que** le détecteur comprend une caméra monochrome.

7. Procédé selon l'une des revendications 1 à 6, **caractérisé en ce que** le marquage en forme de bande s'étend parallèlement au trajet.

8. Procédé selon l'une des revendications 1 à 7, **caractérisé en ce que** les plusieurs pistes ou bandes présentent différents spectres de rémission.

9. Procédé selon l'une des revendications 1 à 8, **caractérisé en ce que**, lors de l'utilisation de trois pistes ou bandes disposées côte à côte, deux pistes ou bandes - de préférence les deux pistes ou bandes externes - présentent le même spectre de rémission.

10. Procédé selon l'une des revendications 1 à 9, **caractérisé en ce que** le détecteur reconnaît les différentes pistes ou bandes et/ou la largeur des différentes pistes ou bandes.

11. Procédé selon l'une des revendications 1 à 10, **caractérisé en ce que** le marquage comprend différents éléments de code.

12. Procédé selon l'une des revendications 1 à 11, **caractérisé en ce que** l'ordre pouvant être prédéterminé au niveau de la première et de la deuxième lumière d'éclairage présente une suite irrégulière ou un changement irrégulier de la première et de la deuxième lumière d'éclairage.

13. Procédé selon l'une des revendications 1 à 12, **caractérisé en ce que** la première et/ou la deuxième lumière d'éclairage sont monochromatiques ou présentent plusieurs longueurs d'ondes ou un spectre de longueurs d'ondes.

14. Dispositif de guidage d'un véhicule sur un terrain, plus particulièrement pour l'exécution du procédé selon l'une des revendications 1 à 13, dans lequel le véhicule peut être guidé au moyen d'un marquage disposé au moins à certains endroits sur le terrain et d'un détecteur conçu pour la détection du marquage et disposé sur le détecteur, le long d'un trajet pouvant être prédéterminé, dans lequel, pour la détection du marquage sur le terrain, le marquage est éclairé au moyen d'un dispositif d'éclairage avec une première lumière d'éclairage et d'une deuxième lumière d'éclairage de longueurs d'ondes différentes et de durées pouvant respectivement être prédéterminées dans un ordre pouvant être prédéterminé,
dans lequel la longueur d'onde de la première lumière d'éclairage et la longueur de la deuxième lumière d'éclairage sont choisies de sorte que le marquage puisse être reconnu par le détecteur sur la base de son spectre de rémission, pouvant être défini lors de l'éclairage avec la première lumière d'éclairage avec une luminosité ou une obscurité, qui se distingue de la luminosité ou de l'obscurité lors de l'éclairage avec la deuxième lumière d'éclairage et
dans lequel un résultat de détection correspondant déterminé par le détecteur peut être utilisé au moyen d'un dispositif de guidage pour le guidage du véhicule le long du trajet,
**caractérisé en ce que** le marquage présente la forme d'une bande avec une piste ou plusieurs pistes ou des bandes.
